# EUROPÄISCHE PATENTANMELDUNG

(11) **EP 1 346 636 A1**
(43) Veröffentlichungstag der Anmeldung: **24.09.2003**
(21) Anmeldenummer: 03005737.6
(22) Anmeldetag: 13.03.2003
(51) Int. Cl.: A01K 97/12

(54) **Bissanzeiger für Angelgeräte**

(30) Priorität: 19.03.2002 DE 20204364 U
(71) Anmelder: Daiwa-Cormoran Sportartikel Vertrieb GmbH, 82194 Gröbenzell (DE)
(72) Erfinder: Willenbruch, Dieter, 81249 München (DE)
(74) Vertreter: Schaumburg, Thoenes & Thurn

(57) **Zusammenfassung**

Bei einem mechanischen Bißanzeiger für Angelgeräte mit einer Haltestange (26), deren eines Ende als Lagerabschnitt für eine schwenkbare Lagerung der Haltestange (26) in einer Bißanzeigerhalterung ausgebildet ist und deren anderes Ende einen Signalkopf trägt, der an einer Angelleine einhängbar ist, hat der Signalkopf an seiner - bezogen auf Gebrauchsstellung - Unterseite (52) eine annähernd senkrecht zur Lagerachse der Haltestange (26) gerichtete Schnurführungsnut (48) hat, deren Nutboden (50) einen Winkel mit der Unterseite (52) des Signalkopfes bildet derart, daß die Nuttiefe zum Lagerabschnitt der Haltestange (26) hin kontinuierlich auf Null abnimmt.

## Beschreibung

Die Erfindung betrifft einen mechanischen Bißanzeiger für Angelgeräte mit einer Haltestange, deren eines Ende als Lagerabschnitt für eine schwenkbare Lagerung der Haltestange in einer Bißanzeiger-Halterung ausgebildet ist und deren anderes Ende einen Signalkopf trägt, der an einer Angelleine einhängbar ist.

Bei den bisher bekannten Bißanzeigern dieser Art ist die Haltestange an einem speziellen Halterungsarm angelenkt, der mit einem Gestell für das Auflegen einer Angelrute oder mit einem Gehäuse eines elektronischen Bißanzeigers verbindbar ist. Der Signalkopf hat an seiner Oberseite eine Öse für die Angelleine, die von zwei an einer Berührungsstelle gegeneinander gespannten Drahtabschnitten gebildet wird, so daß die Angelleine mit einer gewissen Kraft durch Auseinanderdrücken der beiden Drahtabschnitte in die Öse eingeführt bzw. aus der Öse herausgezogen werden kann. Solange die Leine schlaff ist, wird sie durch den an ihr hängenden Bißanzeiger nach unten gezogen. Beißt ein Fisch an, wird die Leine straff gezogen und der Signalkopf angehoben. Wenn der Angler die Angelrute ergreift, sollte im Idealfall die Leine aus der Öse des Signalkopfes herausgleiten. Dies ist jedoch nur dann der Fall, wenn die Leine genau nach oben gezogen wird. Erfolgt der Zug auf die Leine dagegen mit einer seitlichen Komponente, bleibt sie an der Öse hängen und es besteht die Gefahr, daß der Bißanzeiger mitgerissen und verbogen oder beschädigt wird.

Der Erfindung liegt die Aufgabe zugrunde, einen Bißanzeiger der vorstehend genannten Art anzugeben, der einerseits wie der herkömmliche Bißanzeiger eine zuverlässige Anzeige gewährleistet, andererseits aber auch im Falle einer Straffung der Leine zuverlässig von dieser selbsttätig getrennt wird.

Diese Aufgabe wird erfindungsgemäß dadurch gelöst, daß der Signalkopf an seiner - bezogen auf die Gebrauchsstellung - Unterseite eine annähernd senkrecht zur Lagerachse der Haltestange gerichtete Schnurführungsnut hat, deren Nutboden einen Winkel mit der Unterseite des Signalkopfes bildet derart, daß die Nuttiefe zum Lagerabschnitt der Haltestange hin kontinuierlich auf Null abnimmt.

Bei der erfindungsgemäßen Lösung hängt der Signalkopf nicht an der Leine, sondern wird auf diese aufgelegt, so daß die Angelleine in der Schnurführungsnut verläuft. Solange die Angelleine schlaff ist, drückt der Signalkopf aufgrund seines Gewichtes die Leine nach unten. Die Nutwände verhindern ein seitliches Abrutschen des Signalkopfes von der Leine. Wird die Leine gestrafft, liegt der Signalkopf nur noch an der Übergangsstelle des Nutbodens in die Unterseite des Signalkopfes auf der Leine auf, so daß diese nicht mehr zwischen den Nutwänden geführt ist. Damit kann der Signalkopf von der Leine herunterfallen und wird somit zuverlässig frei gegeben. Es besteht keine Gefahr, daß die Leine an dem Signalkopf hängenbleibt und den Bißanzeiger beschädigen kann.

Begünstigt wird das Abgleiten des Signalkopfes von der Leine noch dadurch, daß eine zur Haltestange parallele Seitenfläche des Signalkopfes die Schnurführungsnut an dem Übergang des Nutbodens in die Unterseite des Signalkopfes schneidet, so daß der Signalkopf sofort von der Leine abrutscht, sowie die Leine durch das Straffen derselben aus der Schnurführungsnut frei kommt.

Vorzugsweise hat der Signalkopf eine Halterung für einen auswechselbaren Leuchtkörper, der beispielsweise ein an sich bekanntes Knicklicht sein kann. Bei einer bevorzugten Ausführungsform der Erfindung hat die Halterung für den Leuchtkörper zwei zueinander annähernd parallele Wände aus elastischem Material, die zwischen sich eine Klemmrinne zur Aufnahme des Leuchtkörpers begrenzen.

Bei einer preiswert herzustellenden Ausführungsform mit geringem Gewicht ist der Lagerabschnitt der Haltestange von einem mindestens annähernd rechtwinklig abgebogenen Abschnitt derselben gebildet, der in eine Lagerbohrung der Bißanzeigerhalterung einsteckbar ist.

Neben den vorstehend beschriebenen mechanischen Bißanzeigern wird häufig auch ein elektronischer Bißanzeiger verwendet, der durch ein Blinklicht oder einen akustischen Alarmgeber den Angler auf das Anbeißen eines Fisches aufmerksam machen kann. Ein solcher Bißanzeiger umfaßt in der Regel ein Gehäuse mit einer Stromquelle, einer durch diese gespeisten Signaleinrichtung und einen Schnursensor zum Erfassen einer Schnurbewegung. Zur Verringerung der erforderlichen Teile wird erfindungsgemäß vorgeschlagen, daß die Bißanzeigerhalterung zur Aufnahme des Lagerabschnittes eines vorstehend beschriebenen mechanischen Bißanzeigers an dem Gehäuse des elektronischen Bißanzeigers selbst ausgebildet ist. Gemäß einer anderen Alternative wird erfindungsgemäß ein Adapter vorgeschlagen, der einerseits die Halterung für den vorstehend beschriebenen mechanischen Bißanzeiger hat und andererseits an dem Gehäuse der herkömmlichen elektronischen Bißanzeiger befestigbar ist, wie dies im weiteren noch erläutert wird.

Weitere Merkmale und Vorteile der Erfindung ergeben sich aus der folgenden Beschreibung, welche in Verbindung mit den beigefügten Zeichnungen die Erfindung anhand eines Ausführungsbeispieles erläutert. Es zeigen:
- Figur 1: eine teilweise schematische perspektivische Ansicht eines erfindungsgemäßen mechanischen Bißanzeigers zusammen mit einem zur Halterung desselben bestimmten elektronischen Bißanzeiger,
- Figur 2: eine schematische Unteransicht des in Figur 1 dargestellten mechanischen Bißanzeigers,
- Figur 3: eine teilweise aufgeschnittene Seitenansicht des Signalkopfes des in den Figuren 1 und 2 dargestellten Bißanzeigers und
- Figur 4: eine teilweise schematische perspektivische Darstellung eines Adapters zur Halterung eines erfindungsgemäßen mechanischen Bißanzeigers an dem Gehäuse eines elektronischen Bißanzeigers.

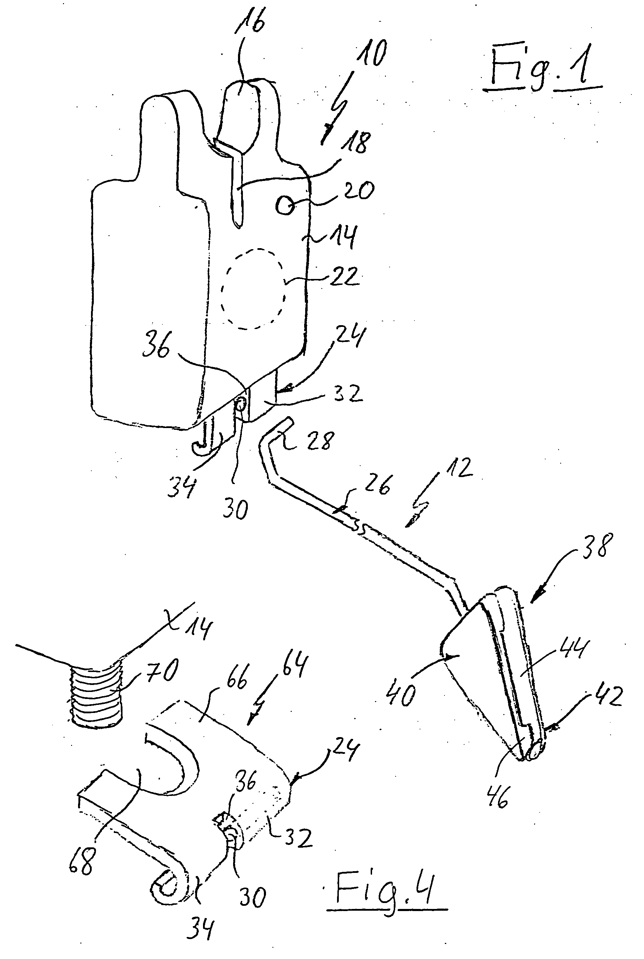

In der Figur 1 erkennt man einen allgemein mit 10 bezeichneten elektronischen Bißanzeiger und einen allgemein mit 12 bezeichneten mechanischen Bißanzeiger. Der elektronische Bißanzeiger hat ein Gehäuse 14, an dessen Oberseite eine Gabel 16 zum Einlegen einer Angelrute ausgebildet ist. Zwischen den beiden Gabelzinken befindet sich ein Schlitz 18, in den die Angelleine eingelegt wird und in dem ein nicht dargestellter Schnursensor angeordnet ist, der auf die Bewegung der Angelleine anspricht, wenn diese von einem Fisch abgezogen wird. Innerhalb des Gehäuses befindet sich eine Steuerschaltung, die auf den Schnursensor anspricht und ein optisches Signalelement 20 in Form einer Lampe oder Leuchtdiode oder einen akustischen Signalgeber in Form eines gestrichelt angedeuteten Summers 22 betätigt. An der Unterseite des Gehäuses 14 befindet sich eine Halterung 24 zum Einhängen des mechanischen Bißanzeigers 12, wie dies im weiteren noch näher beschrieben wird.

Der mechanische Bißanzeiger umfaßt eine Haltestange 26, die an ihrem einen Ende einen rechtwinklig abgebogenen Abschnitt 28 hat, der in eine Bohrung 30 eines Haltenockens 32 der Halterung 24 eingehängt werden kann und anschließend in dieser Bohrung 30 durch einen zweiten Haltenocken 34 gehalten wird, der von dem ersten Haltenocken 32 durch einen dem Durchmesser der Haltestange 26 entsprechenden Spalt 36 getrennt ist.

An seinem entgegengesetzten Ende trägt die Haltestange einen Signalkopf 38, der einen in der Seitenansicht annähernd dreieckförmigen Kunststoffkörper 40 hat, auf dessen Oberseite eine Klemmhalterung 42 für ein Knicklicht 44 ausgebildet ist. Die Klemmhalterung 42 umfaßt zwei aus einem federelastischen Material bestehende Stege 46, die zwischen sich eine Aufnahmenut für das Knicklicht 44 begrenzen, das nach dem Aktivieren einfach in diese Aufnahmenut eingedrückt wird und nach dem Verbrauchen des Leuchtstoffes auch bequem wieder herausgenommen werden kann.

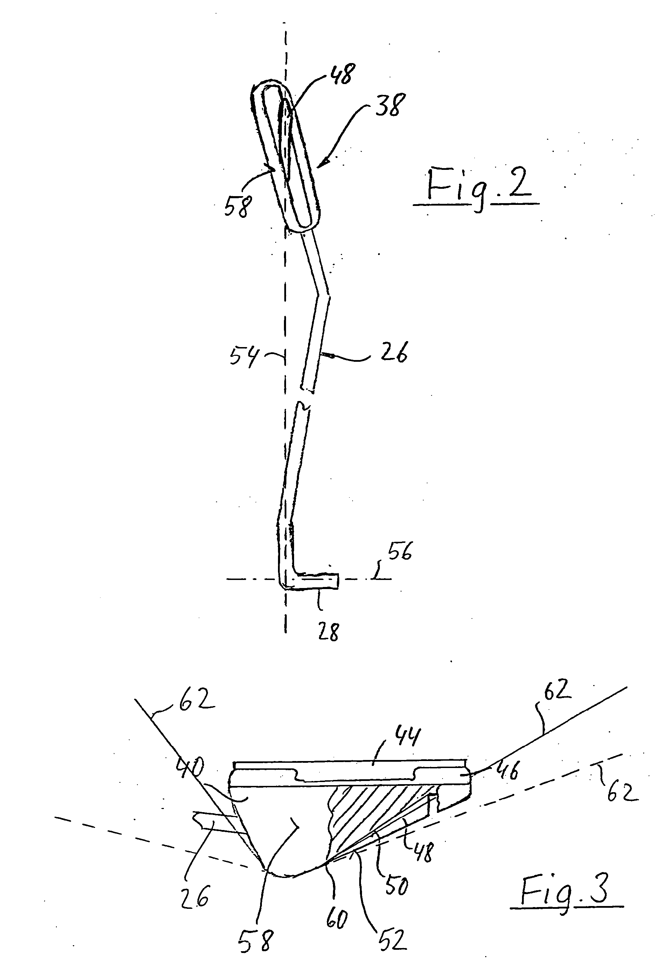

An seiner Unterseite hat der Kunststoffkörper 40 eine Schnurführungsnut 48 deren Nutboden 50 vom freien Ende des Kunststoffkörpers 40 zu dessen rückwärtigem Ende, d.h. in Richtung auf den Lagerabschnitt 28 der Haltestange 26 hin in die Unterseite 52 des Kunststoffkörpers 40 übergeht, so daß die Tiefe der Nut 48 vom vorderen zum rückwärtigen Ende des Kunststoffkörpers 40 hin kontinuierlich auf Null abnimmt, wie man dies in Figur 3 erkennen kann.

In der Darstellung der Figur 2 erkennt man, daß die Haltestange 26 nicht völlig gerade verläuft, sondern gekrümmt oder geknickt ist und daß auch der Signalkopf 38 mit seiner Längsrichtung schräg zu einer gestrichelten Linie 54 gerichtet ist, die mindestens annähernd senkrecht zu der Lagerachse 56 des Lagerabschnittes 28 gerichtet ist und mindestens annähernd dem Verlauf der Angelschnur entspricht, wenn die Angelrute in der Gabel 16 des elektronischen Bißanzeigers 10 liegt. Wie man erkennt, ist die Schnurführungsnut 48 nicht parallel zur Längsrichtung des Signalkopfes 38 sondern parallel zu der Linie 54 gerichtet, so daß die Schnurführungsnut 48 die Seitenfläche 48 des Kunststoffkörpers 40 an der Übergangstelle 60 des Nutbodens 50 in die Unterseite 52 des Kunststoffkörpers 40 schneidet.

In der Gebrauchsstellung wird der mechanische Bißanzeiger 12, der um seine Lagerachse 56 frei drehbar in der Halterung 24 gelagert ist, nach oben geschwenkt und auf die Angelleine 62 aufgelegt. Solange diese schlaff ist, drückt der Signalkopf 38 aufgrund seines Gewichtes die Angelleine 26 nach unten, so daß diese den in Figur 3 durch eine ausgezogene Linie wiedergegebenen Verlauf hat. Dabei liegt ein Abschnitt der Angelleine 62 in der Schnurführungsnut 48, so daß der Signalkopf 38 nicht seitlich von der Angelleine 42 abrutschen kann.

Wird die Angelleine 62 dagegen gestrafft, weil ein Fisch angebissen hat, wird der Signalkopf 38 angehoben, wobei die Leine 62 aus der Schnurführungsnut 48 austritt, wie dies durch den gestrichelten Verlauf der Leine 62 angedeutet ist. Da die Schnurführungsnut an der Übergangsstelle 60 in die Seitenwand 58 des Kunststoffkörpers mündet, gleitet die aus der Schnurführungsnut 48 herausgehobene Angelleine 62 an der Seitenwand 58 des Signalkopfes 48 ab, so daß der Signalkopf 38 frei nach unten fallen kann. Es ist nahezu unmöglich, daß der Signalkopf 38 an der Leine 62 hängen bleibt, wenn der Angler die Angelrute aus der Gabel 16 des elektronischen Bißanzeigers hebt. Dadurch wird eine unbeabsichtigte Beschädigung des Bißanzeigers 12 mit Sicherheit vermieden.

Figur 4 zeigt einen allgemein mit 64 bezeichneten Adapter zur Halterung des mechanischen Bißanzeigers 12 an dem Gehäuse herkömmlicher elektronischer Bißanzeiger, sofern diese nicht unmittelbar mit der Halterung 24 verbunden sind, wie dies in Figur 1 dargestellt ist. Der Adapter 64 hat eine Befestigungsplatte 66 mit einer U-förmigen Aussparung 68, mit welcher der Adapter 64 auf einen Gewindezapfen 70 aufschiebbar ist, der üblicherweise an der Unterseite des Gehäuses angeordnet ist und mit dem der Bißanzeiger 10 an einem Stativ oder einer sonstigen Halterung befestigbar ist. Die Befestigungsplatte 66 ist mit den gleichen Haltenocken 32 und 34 verbunden, wie sie auch an dem Gehäuse 14 des in Figur 1 dargestellten elektronischen Bißanzeigers 10 angeordnet sind. Damit kann der erfindungsgemäße mechanische Bißanzeiger 12 mit jedem beliebigen herkömmlichen elektronischen Bißanzeiger 10 kombiniert werden.

## Patentansprüche

1. Mechanischer Bißanzeiger für Angelgeräte mit einer Haltestange (26), deren eines Ende als Lagerabschnitt (28) für eine schwenkbare Lagerung der Haltestange (26) in einer Bißanzeigerhalterung (24) ausgebildet ist und deren anderes Ende einen Signalkopf (38) trägt, der an einer Angelleine (62) einhängbar ist, **dadurch gekennzeichnet, daß** der Signalkopf (38) an seiner-bezogen auf Gebrauchsstellung - Unterseite (52) eine annähernd senkrecht zur Lagerachse (56) der Haltestange (26) gerichtete Schnurführungsnut (48) hat, deren Nutboden (50) einen Winkel mit der Unterseite (52) des Signalkopfes (38) bildet derart, daß die Nuttiefe zum Lagerabschnitt (38) der Haltestange (26) hin kontinuierlich auf Null abnimmt.

2. Mechanischer Bißanzeiger nach Anspruch 1, **dadurch gekennzeichnet, daß** eine zur Haltestange (26) annähernd parallele Seitenfläche (58) des Signalkopfes (38) die Schnurführungsnut (48) an dem Übergang (60) des Nutbodens (50) in die Unterseite (52) des Signalkopfes (38) schneidet.

3. Mechanischer Bißanzeiger nach Anspruch 1 oder 2, **dadurch gekennzeichnet, daß** der Signalkopf (38) eine Halterung (52) für einen auswechselbaren Leuchtkörper (44) hat.

4. Mechanischer Bißanzeiger nach Anspruch 3, **dadurch gekennzeichnet, daß** die Halterung (42) für den Leuchtkörper (44) zwei zueinander annähernd parallele Wände (46) aus elastischem Material umfaßt, die zwischen sich eine Klemmrinne zur Aufnahme des Leuchtkörpers (44) begrenzen.

5. Mechanischer Bißanzeiger nach einem der Ansprüche 1 bis 4, **dadurch gekennzeichnet, daß** der Lagerabschnitt (28) der Haltestange (26) von einem mindestens annähernd rechtwinklig abgebogenen Abschnitt der Haltestange (26) gebildet ist, der in eine Lagerbohrung (30) der Bißanzeigerhalterung (24) einsteckbar ist.

6. Elektronischer Bißanzeiger mit einem Gehäuse (14), einer Stromquelle, einer durch diese gespeisten Signaleinrichtung und einem Schnursensor zum Erfassen einer Schnurbewegung, **dadurch gekennzeichnet, daß** die Bißanzeigerhalterung (24) zur Aufnahme des Lagerabschnittes (28) eines Bißanzeigers (12) nach einem der Ansprüche 1 bis 5 an dem Gehäuse (14) ausgebildet ist.

7. An einem Gehäuse eines elektronischen Bißanzeigers befestigbarer Adapter (64) mit einer Bißanzeigerhalterung (24) für einen Bißanzeiger nach einem der Ansprüche 1 bis 5.
